# EUROPEAN PATENT APPLICATION

(11) **EP 3 401 348 A1**
(43) Date of publication of application: **14.11.2018**
(21) Application number: 17170637.7
(22) Date of filing: 11.05.2017
(51) Int. Cl.: C08G 63/685, C08G 63/91, C09D 167/00, C09J 167/00, C08G 71/04, C09D 175/06, C09J 175/06

(54) **METHOD FOR PRODUCING FUNCTIONALIZED POLYESTERS**

(71) Applicant: Henkel AG & Co. KGaA, 40589 Düsseldorf (DE)
(72) Inventor: PARADAS, Miguel, 08100 Mollet del Vallés (ES); FLORES-PENALBA, Sonia, 08290 Cerdanyola del Vallés (ES); GARCIA-MIRALLES, José, 40217 Düsseldorf (DE); KINZELMANN, Hans-Georg, 50259 Pulheim (DE); SEBASTIÁN PÉREZ, Rosa Maria, 08291 Ripollet (ES); MARQUET CORTÉS, Jordi, 08034 Barcelona (ES); AGUILERA CORROCHANO, Jorge, 08202 Barcelona (ES); ARIOLI, Federica, 08041 Barcelona (ES); HÉMERY, Thérèse, 40591 Düsseldorf (DE)

(57) **Abstract**

The present invention is directed to a method for preparing an amino and hydroxy-functional polyester, said method comprising: reacting glycerine carbonate with an anhydride to form an Adduct (A); reacting said Adduct (A) with at least one polyepoxide compound to form said cyclic carbonate functional polyester (CC-PES); and, reacting said cyclic carbonate functional polyester with at least one aliphatic, alicyclic, heterocyclic or aromatic amine containing at least two primary and / or secondary amine groups. More particularly, the present application is directed to a method for preparing an amino and hydroxy-functional polyester, said method comprising the stages: A) reacting glycerine carbonate with an anhydride to form an Adduct (A); B) providing a polycarboxylic acid; C) reacting said polycarboxylic acid with at least one diglycidyl ether to form an epoxy functional polyester; D) reacting said epoxy functional polyester with said Adduct (A) to from a cyclic carbonate functional polyester; and, E) reacting said cyclic carbonate functional polyester with at least one aliphatic, alicyclic, heterocyclic or aromatic amine containing at least two primary and / or secondary amine groups.

## Description

### FIELD OF THE INVENTION

The present application is directed to a method for producing functionalized polyesters. More particularly, the application is directed to method for producing amino- and hydroxyl-functionalized polyesters and to the use of said polyesters in coating, adhesive or sealant compositions.

### BACKGROUND TO THE INVENTION

Diamines, triamines and higher functionality polyamines are versatile and commonly used curatives that can react with a variety of polymeric or resinous systems: for illustrative purposes only, compositions based on epoxy resins, polyisocyanates and cyclic carbonates can be cured with polyamines. Problematically, however, most low molecular aliphatic polyamines are volatile, possess limited supplementary functionalization and provide only limited contribution to the mechanical properties of the cured systems. Further, such low molecular weight polyamines present numerous health hazards - such as acute toxicity, irritation and dermal and pulmonary sensitization - as mentioned in Sullivan et al. (Ed.) Clinical Environmental Health and Toxic Exposures 2nd Edition (2001) and Tarvainen et al. Journal of Environmental Medicine (1999) 1.1.3.

The present invention is concerned with the development of polymeric amino-curatives which possess a polyester backbone, which are stable and non-volatile, and which can contribute to the mechanical properties of the final curable composition. In developing higher molecular weight amino-curatives, the present invention seeks to mitigate those environmental health concerns related to the migration and diffusion of amines in fluid systems.

US Patent No. 5,508,379 (Menovcik et al.) describes polyester polymers having pendant carbamate groups, which polymers are prepared by: (a) reacting a hydroxyalkyl cyclic carbonate compound with a compound having at least one cyclic anhydride group to form a half-ester acid comprising a cyclic carbonate group; (b) reacting the cyclic carbonate group on the half-ester from step (a) with ammonia, ammonium hydroxide or a primary amine to ring open the cyclic carbonate and form a compound comprising an acid group, a hydroxyl group and a pendant carbamate group; and, (c) reacting a mixture comprising the compound from step (b) and optionally comprising a polyol or a polyacid or both to form the polyester having pendant carbamate groups. Despite describing the ring opening of cyclic carbonates with amines, the final polyester products do not retain any reactive amino groups.

US Patent No. 5,175,231 (Rappoport et al.) describes an isocyanate-free method for producing polyurethanes. The disclosed method comprises the step of reacting, in the aqueous phase, a compound (CC) containing a plurality of cyclocarbonate groups with a diamine of which the two amine groups have different reactivities: the product of this step is an urethane oligomer with terminal amine groups, which urethane oligomer can then be reacted in several different ways to form polyurethane. The compound (CC) is prepared by the addition of CO₂ to an epoxy group-containing oligomer, said oligomers typically having a polyether backbone and a functionality of greater than 2: this process of addition requires high pressure, high temperatures and very particular catalytic systems.

WO 2016/124518 A1 (Evonik Degussa GMBH) describes the synthesis of cyclic carbonate terminated polymers and, in an embodiment, the synthesis of multifunctional polyesters with 5-membered cyclic carbonate functionalization. Importantly, further functionalization of the cylic carbonate-terminated polymers with polyamines is not described in this citation.

In WO 2016/124518 A1, the described polyesters are synthesized in a two-step reaction: firstly a carboxy-terminated polyester PES is made which is subsequently esterified using glycerin carbonate. This process presents a number of disadvantages. The step of coupling the glycerine carbonate requires either Lewis acids (Ti or Sn based) or strong acids (such as methane sulfonic acid): such Lewis acids can darken the final material, may require separation from the final product and may further be either toxic or expensive. In addition, the coupling step is performed under conditions - such as temperatures greater than 180°C - which are considered are too harsh for the 5-membered cyclic carbonate ring to remain stable: an increase in hydroxyl value is observed in performing the glycerine carbonate coupling step of the enabled embodiments, indicating the undesired opening of the cyclic carbonate ring.

WO2012/007254 (Total Petrochemical Res. Feluy et al.) describes a process for preparing poly(carbonate-urethane) or poly(ester-urethane) that comprises the steps of: a) ring-opening polymerisation of a first 5-, 6- or 7-membered cyclic carbonate or of a cyclic ester or diester, optionally bearing functional groups, in the presence of a first catalyst system and in the presence of one or more diols or polyols acting both as co-initiators and chain transfer agents; b) chemical modification of the hydroxyl chain-end groups into carboxylic groups in the presence of a second catalyst system; c) a coupling reaction with at least 2 equivalents of a second 5-, 6-, or 7- membered cyclic carbonate, bearing at least one functional group enabling coupling with the carboxylic moiety, in the presence of a third catalyst system; d) polyaddition of a diamine or a polyamine via ring-opening of the second terminal 5-, 6-membered or 7-membered cyclic carbonate of step c); and, e) recovery of the poly(carbonate-urethane) or poly(ester-urethane). Following this process, the backbone structure of the obtained polymers is derived exclusively from the ring-opening polymerization of the first cyclic carbonate or cyclic ester: the obtained structures are therefore of limited variety. Further, the employment of three distinct catalyst systems should particularly be noted as it realistically precludes the industrial implementation of the described process.

### STATEMENT OF THE INVENTION

In accordance with a first aspect of the present invention there is provided a method for preparing an amino and hydroxy-functional polyester, said method comprising: reacting glycerine carbonate with an anhydride to form an Adduct (A); reacting said Adduct (A) with at least one polyepoxide compound to form said cyclic carbonate functional polyester (CC-PES); and, reacting said cyclic carbonate functional polyester with at least one aliphatic, alicyclic, heterocyclic or aromatic amine containing at least two primary and / or secondary amine groups.

The reactant anhydride will usually be an anhydride of an acid selected from the group consisting of: maleic acid; fumaric acid; citraconic acid; itaconic acid; glutaconic acid; phthalic acid; isophthalic acid (IA); terephthalic acid; cyclohexane dicarboxylic acid; adipic acid; sebacic acid (SeA); azealic acid; malonic acid; succinic acid; alkyl succinic acids; alkenyl succinic acids; glutaric acid; alkyl glutaric acids; alkenyl glutaric acids; and, mixtures thereof. Preferably, the reactant anhydride is selected from the group consisting of: maleic anhydride; adipic anhydride; succinic anhydride; alkyl succinic anhydrides; alkenyl succinic anhydrides; glutaric anhydride; alkyl glutaric anhydrides; alkenyl glutaric anhydrides; and, mixtures thereof.

The reaction of glycerine carbonate with said anhydride - referred to as Stage A in certain embodiments herein below - will typically be performed under at least one of the following limitations: i) an anhydride: glycerine carbonate molar ratio in the range from 2:1 to 0.8:1, preferably in the range from 1.2:1 to 0.8:1 and more preferably in the range from 1.1:1 to 0.9:1; ii) a temperature in the range from 60° to 180°C, preferably from 80° to 150°C; and, iii) anhydrous conditions. For completeness, it is noted that these process limitations are not mutually exclusive and one, two or three of the limitations may be effected.

When carrying out the reaction of the Adduct (A) with the at least one polyepoxide compound, it should be ensured that all the epoxy groups originally present have reacted. The compounds might thus be reacted at an equivalence ratio of the carboxyl groups to the epoxy groups of at least 1:1, for example at an equivalence ratio of (1.0 - 1.2):1 or (1.0 - 1.1):1.

In the reaction of the cyclic carbonate functional polyester with an amine - referred to as Stage E in certain embodiments herein below - it is preferable that said at least one reactant amine having at least two primary and / or secondary amine groups is selected from the group consisting of: C1 to C20 aliphatic amines; C4 to C20 alicyclic amines; and, C2 to C20 heterocyclic amines. More preferably, said at least one reactant amine is selected from the group consisting of: C1 to C12 aliphatic diamines; C4 to C12 alicyclic diamines; and, C2 to C12 heterocyclic diamines.

Two statements of particular preference should be noted with regard to the above mentioned group of reactant amines. Firstly, compounds having exactly two amine groups, which groups may be primary and / or secondary amine groups, are preferred. Secondly, but not mutually exclusively, compounds containing at least two primary and / or secondary amine groups having different reactivities are preferred. For example, the reactant amine may desirably be a polyamine, in particular a diamine, having at least one primary amine group and at least one secondary amine group.

In a significant embodiment of the present invention, there is provided a method for preparing an amino and hydroxy-functional polyester, said method comprising the stages: A) reacting glycerine carbonate with an anhydride to form an Adduct (A); B) providing a polycarboxylic acid; C) reacting said polycarboxylic acid with at least one diglycidyl ether to form an epoxy functional polyester; D) reacting said epoxy functional polyester with said Adduct (A) to from a cyclic carbonate functional polyester; and, E) reacting said cyclic carbonate functional polyester with at least one aliphatic, alicyclic, heterocyclic or aromatic amine containing at least two primary and / or secondary amine groups.

By preference, the polycarboxylic acid provided in Stage B is a dicarboxylic or tricarboxylic acid, with dicarboxylic acids being particularly desired. In an alternative but not mutually exclusive expression of preference, the provided polycarboxylic acids should generally be characterized by an acid value (Av) of from 50 to 1200 mgKOH/g and will preferably be characterized by an acid value (Av) of from 80 to 1100 mgKOH/g.

In an important embodiment, the polycarboxylic acid is a carboxyl functional polyester (Carboxy-PES). The means of producing or providing such a carboxyl functional polyester at Stage B is not particularly limited. However, it is desired that the provided carboxyl functional polyester (Carboxy-PES) be characterized by an acid value (Av) of from 50 to 500 mgKOH/g, preferably from 80 to 430 mgKOH/g.

In an illustrative process, the carboxyl-functional polyester (Carboxyl-PES) of Stage B is provided by the steps of: i) providing a polyester having two or more hydroxyl groups; and, ii) reacting said hydroxyl functional polyester with a carboxylic acid or an anhydride thereof. The so-provided hydroxyl functional polyester may preferably be characterized by having a hydroxyl number of from 50 to 300 mgKOH/g, preferably from 80 to 150 mgKOH/g.

In an alternative process, the carboxyl functional polyester (Carboxy-PES) of Stage B is provided by the reaction of a stoichiometric excess of a dicarboxylic acid with at least one diol in the presence of a catalytic amount of an esterification catalyst.

In Stage C of the above defined process, it is preferred that the or each diglycidyl ether has an epoxy equivalent weight of from 100 to 700 g/eq, preferably from 120 to 320 g/eq. Independently of this however, it is preferred in Stage C that the molar ratio of the diglycidyl ether compounds to the polycarboxylic acid - where applicable, the carboxyl functional polyester - is from 1.5:1 to 3:1, preferably from 1.8: 1 to 2.2:1.

The aforementioned equivalence ratio of carboxyl groups to epoxy groups remains applicable to the reaction, in stage D, of the adduct (A) and the epoxy-functional polyester, the identified polyepoxide compound. Illustratively, in the Stage D reaction, the molar ratio of the Adduct (A) to the epoxy functional polyester (Epoxy-PES) may be from 2:1 to 3:1, preferably from 2:1 to 2.5:1.

It is noted that effective processes according to the present invention include the performance of both of Stages C and D: i) at a temperature range of from 40° to 180°C, preferably from 60° to 170°C; and / or, ii) in the presence of a catalytic amount of a basic catalyst. Such a temperature range equates to mild conditions which, in the reaction of Stage D, can prevent the 5-membered cyclic carbonate ring of the adduct from opening.

The intermediate product provided after stage D is an oligomeric and polymeric compound which is functionalized with 5-membered cyclic carbonate groups; the polyester group is disposed in the beta position relative to the cyclic carbonate and therefore acts as an electron withdrawing group which serves to increase the reactivity of the 5-membered cyclic carbonate ring: this reactivity is obviously of value in the subsequent reaction with amines which opens that ring. It will be recognized that this intermediate, functionalized compound can be provided at a range of molecular weights: the molecular weight and structure of the provided carboxyl functional polyester (Carboxy-PES) will be substantially determinative of the molecular weight and structure the cyclic carbonate functional polyester.

It is further noted that the process of the present invention has been performed effectively where Stages B to E have been carried out in one vessel sequentially and without separation of the intermediate products. This "one-pot" solution renders the present invention extremely simple to perform.

The present invention provides a straightforward process for the synthesis of fluid amino and hydroxyl functional polyesters. These polyesters will contain at least two amino groups of different reactivity: when employed as an amino curative the polyester backbone becomes incorporated into the cured products and these contribute to the thermal and mechanical stability thereof.

In accordance with a second aspect of the present invention, there is provided an amino and hydroxy-functional polyester obtained by the method defined herein above and in the appended claims. Preferably, said amino and hydroxy-functional polyester is characterized by at least one of: a number average molecular weight (Mn) of from 500 to 5000 g/mol, preferably from 800 to 3000 g/mol; and, an amine value of from 10 to 400 mgKOH/g, preferably from 20 to 200 mgKOH/g; and, a hydroxyl value of from 30 to 500 mgKOH/g, preferably from 40 to 350 mgKOH/g.

In accordance with a third aspect of the present invention, there is provided a curable coating, adhesive or sealant composition comprising: an amino and hydroxy-functional polyester as defined herein above and in the appended claims; and, at least one multifunctional compound (H) having at least two functional groups (F) selected from the group consisting of: epoxy groups; isocyanate groups; and cyclic carbonate groups.

### DEFINITIONS

As used herein, the singular forms "*a*", "*an*" and "*the*" include plural referents unless the context clearly dictates otherwise.

The terms "*comprising*", "*comprises*" and "*comprised* of" as used herein are synonymous with "*including*", "*includes*", "*containing*" or "*contains*", and are inclusive or open-ended and do not exclude additional, non-recited members, elements or method steps.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The terms "*preferred*", "*preferably*", "*desirably*", "*in particular*" and "*particularly*" are used frequently herein to refer to embodiments of the disclosure that may afford particular benefits, under certain circumstances. However, the recitation of one or more preferable or preferred embodiments does not imply that other embodiments are not useful and is not intended to exclude those other embodiments from the scope of the disclosure.

The molecular weights given in the present text refer to number average molecular weights (Mn), unless otherwise stipulated. All molecular weight data refer to values obtained by gel permeation chromatography (GPC), unless otherwise stipulated.

The "*acid value*" or "*acid number*" is a measure of the amount of free acid present in a compound: the acid value is the number of milligrams of potassium hydroxide required for the neutralization of free acid present in one gram of a substance (mg KOH/g). Any measured acid values given herein have been determined in accordance with German Standard DIN 53402.

Unless otherwise stated, OH values given herein were obtained following Deutsche (DGF) Einheitsmethoden zur Untersuchung von Fetten, Fettprodukten, Tensiden und verwandten Stoffen (Gesamtinhaltsverzeichnis 2016) C-V 17b (53).

Having regard to the amino and hydroxyl functional polyesters, the total hydroxyl and amine value were measured in an established manner, specifically wherein the hydroxyl and amine groups were reacted with an excess of acetic acid anhydride, and the resulting free acetic acid group was back titrated with KOH to assess the total millimolar amount of hydroxy and amine groups in 1 gram of sample. The amine value *per* se was assessed by titration with 0.1 N hydrochloric acid - in accordance with ASTM D2572-91 - and thereafter calculated back to mg KOH/g. The hydroxyl value of said polyesters was calculated based on the determined amine value and the determined total amine and hydroxyl value.

As used herein, room temperature is 23°C plus or minus 2°C.

As used herein, the term "*equivalent (eq.")* relates, as is usual in chemical notation, to the relative number of reactive groups present in the reaction; the term "*milliequivalent*" (*meq*) is one thousandth (10⁻³) of a chemical equivalent.

The term "*equivalent weigh*" as used herein refers to the molecular weight divided by the number of a function concerned. As such, "*epoxy equivalent weight*" (EEW) means the weight of resin, in grams, that contains one equivalent of epoxy.

As used herein, "*aliphatic group*" means a non-aromatic, saturated or unsaturated linear (i.e., straight-chain) or branched organic group. The term "*aromatic group*" means a mono- or polynuclear aromatic hydrocarbon group.

As used herein, "*alkyl group*" refers to a monovalent group that is a radical of an alkane and includes straight-chain and branched organic groups, which groups may be substituted or unsubstituted. The term "*alkylene group*" refers to a divalent group that is a radical of an alkane and includes linear and branched organic groups, which groups may be substituted or substituted.

Specifically, as used herein, "*C₁-C₆alkyl*" group refers to an alkyl group that contains 1 to 6 carbons atoms, Examples of alkyl groups include, but are not limited to: methyl; ethyl; propyl; isopropyl; n-butyl; isobutyl; sec-butyl; tert-butyl; n-pentyl; and, n-hexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1-6 carbon atoms (C₁-C₆ alkyl) - for example unsubstituted alkyl groups containing from 1 to 4 carbon atoms (C₁-C₄ alkyl) or 1 or 2 carbon atoms (C₁-C₂ alkyl) - should be noted.

As used herein, "*C₄-C₂₀ alkenyl*" group refers to an aliphatic carbon group that contains 4 to 20 carbon atoms and at least one double bond. Like the aforementioned alkyl group, an alkenyl group can be straight or branched, and may optionally be substituted. The term "*alkenyl*" also encompasses radicals having "cis" and "trans" configurations, or alternatively, "E" and "Z" configurations, as appreciated by those of ordinary skill in the art. In general, however, a preference for unsubstituted alkenyl groups containing from 4 to 18 (C₄-₁₈) or 4 to 12 (C₂₋₁₂) carbon atoms should be noted. And Examples of C₄-C₂₀ alkenyl groups include, but are not limited to: 2-butenyl; 4-methylbutenyl; 1-pentenyl, 2-pentenyl, 3-pentenyl, 4-pentenyl, 4-methyl-3-pentenyl, 1-hexenyl, 3-hexenyl, 5-hexenyl, 1-heptenyl, 1-octenyl and n-dodecenyl.

As used herein, "*polycarboxylic acid*" includes any organic structure with more than one carboxylic acid functional group. Specifically, the term encompasses polymers bearing at least two carboxyl functional groups and thus specifically encompasses: carboxyl-functional polyester resins; carboxyl-functional polyacrylate resins; carboxyl-functional polymethacrylate resins; carboxyl-functional polyamide resins; carboxyl-functional polyimide resins; and, carboxyl-functional polyolefin resins.

As used herein, "*polyol*" refers to any compound comprising two or more hydroxyl groups. The term thus encompasses diols, triols and compounds containing four or more -OH groups.

The term "*epoxide compound*" denotes monoepoxide compounds, polyepoxide compounds and epoxide functional prepolymers. The term "*polyepoxide compound*" is thus intended to denote epoxide compounds having at least two epoxy groups. Further, the term "*diepoxide compound*" is thus intended to denote epoxide compounds having two epoxy groups.

As used herein "*polyisocyanate*" means a compound comprising at least two -N=C=O functional groups, for example from 2 to 5 or from 2 to 4 -N=C=O functional groups. Suitable polyisocyanates include aliphatic, cycloaliphatic, aromatic and heterocyclic isocyanates, dimers and trimers thereof, and mixtures thereof.

Aliphatic and cycloaliphatic polyisocyanates can comprise from 6 to 100 carbon atoms linked in a straight chain or cyclized and having at least two isocyanate reactive groups. Examples of suitable aliphatic isocyanates include but are not limited to straight chain isocyanates such as ethylene diisocyanate, trimethylene diisocyanate, tetramethylene diisocyanate, 1,6-hexamethylene diisocyanate (HDI), octamethylene diisocyanate, nonamethylene diisocyanate, decamethylene diisocyanate, 1,6,11-undecanetriisocyanate, 1,3,6- hexamethylene triisocyanate, bis(isocyanatoethyl)-carbonate, and bis (isocyanatoethyl) ether. Exemplary cycloaliphatic polyisocyanates include, but are not limited to, dicyclohexylmethane 4,4'-diisocyanate (H₁₂MDI), 1-isocyanatomethyl-3-isocyanato-1,5,5-trimethylcyclohexane (isophorone diisocyanate, IPDI), cyclohexane 1,4-diisocyanate, hydrogenated xylylene diisocyanate (H₆XDI), 1-methyl-2,4-diisocyanato-cyclohexane, m- or p-tetramethylxylene diisocyanate (m-TMXDI, p-TMXDI) and dimer fatty acid diisocyanate.

The term "*aromatic polyisocyanate*" is used herein to describe organic isocyanates in which the isocyanate groups are directly attached to the ring(s) of a mono- or polynuclear aromatic hydrocarbon group. In turn the mono- or polynuclear aromatic hydrocarbon group means an essentially planar cyclic hydrocarbon moiety of conjugated double bonds, which may be a single ring or may include multiple condensed (fused) or covalently linked rings. The term aromatic also includes alkylaryl. Typically, the hydrocarbon (main) chain includes 5, 6, 7 or 8 main chain atoms in one cycle. Examples of such planar cyclic hydrocarbon moieties include, but are not limited to, cyclopentadienyl, phenyl, napthalenyl-, [10]annulenyl-(1,3,5,7,9-cyclodecapentaenyl-), [12]annulenyl-, [8]annulenyl-, phenalene (perinaphthene), 1,9-dihydropyrene, chrysene (1,2-benzophenanthrene). Examples of alkylaryl moieties are benzyl, phenethyl, 1-phenylpropyl, 2-phenylpropyl, 3-phenylpropyl, 1-naphthylpropyl, 2-naphthylpropyl, 3-naphthylpropyl and 3-naphthylbutyl.

Exemplary aromatic polyisocyanates include, but are not limited to: all isomers of toluene diisocyanate (TDI), either in the isomerically pure form or as a mixture of several isomers; naphthalene 1,5-diisocyanate; diphenylmethane 4,4'-diisocyanate (MDI); diphenylmethane 2,4'-diisocyanate and mixtures of diphenylmethane 4,4'-diisocyanate with the 2,4' isomer or mixtures thereof with oligomers of higher functionality (so-called crude MDI); xylylene diisocyanate (XDI); diphenyl-dimethylmethane 4,4'-diisocyanate; di- and tetraalkyl-diphenylmethane diisocyanates; dibenzyl 4,4'-diisocyanate; phenylene 1,3-diisocyanate; and, phenylene 1,4-diisocyanate.

It is noted that the term "*polyisocyanate*" is intended to encompass pre-polymers formed by the partial reaction of the aforementioned aliphatic, cycloaliphatic, aromatic and heterocyclic isocyanates with polyols to give isocyanate functional oligomers, which oligomers may be used alone or in combination with free isocyanate(s).

For completeness: a) a primary amine group is an atomic grouping of the type "-NH₂" (R-H); (b) a secondary amine group is an atomic grouping of the type "-NHR"; c) a tertiary amine group is an atomic grouping of the type "-NR₂". An amino-functional polymer means a polymer possessing at least one amine group.

As used herein, the term "*catalytic amount*" means a sub-stoichiometric amount of catalyst relative to a reactant.

The term "*essentially free*" is intended to mean herein that the applicable group, compound, mixture or component constitutes less than 0.1 wt.%, based on the weight of the defined composition.

### DETAILED DESCRIPTION OF THE INVENTION

In its broadest expression, the present invention provides a method for preparing a cyclic carbonate functional polyester, said method comprising: reacting glycerine carbonate with an anhydride to form an Adduct (A); reacting said Adduct (A) with at least one polyepoxide compound to form said cyclic carbonate functional polyester (CC-PES); and, reacting said cyclic carbonate functional polyester (CC-PES) with at least one aliphatic, alicyclic, heterocyclic or aromatic amine containing at least two primary and / or secondary amine groups.

### Preparation of Adduct (A)

In the first stage of the above defined process - which may be referred to herein below as Stage A - said glycerine carbonate is reacted with a polyfunctional anhydride. This esterification reaction yields an adduct (A) having a carboxylic acid group, in which adduct the ester group is disposed in the beta (β-) position as will be illustrated herein below.

The reactant glycerine carbonate may be identified alternatively as 4-hydroxymethyl-1,3-dioxolan-2-one. The compound is commercially available as Jeffsol™ manufactured by Huntsman Corporation. Alternatively, the compound can be synthesized by methods known in the art, including: by the reaction of glycerin with a carbonate source such as phosgene, with a dialkyl carbonate or with an alkylene carbonate; by reaction of glycerin with urea, carbon dioxide and oxygen; or, by reaction of carbon dioxide with glycidol. The following documents are instructive on such synthesis methods: US Patent No. 2,915,529; US Patent No. 6,025,504; European Patent No. 1,156,042; and, US Patent No. 5,359,094.

Whilst there is no particular intention to limit said reactant polyfunctional anhydrides, most suitable are the anhydrides of acids selected from the group consisting of: maleic acid; fumaric acid; citraconic acid; itaconic acid; glutaconic acid; phthalic acid; isophthalic acid (IA); terephthalic acid; cyclohexane dicarboxylic acid; adipic acid; sebacic acid (SeA); azealic acid; malonic acid; succinic acid; alkyl succinic acids; alkenyl succinic acids; glutaric acid; alkyl glutaric acids; alkenyl glutaric acids; and mixtures thereof.

The polyfunctional anhydride is preferably an anhydride selected from the group consisting of: maleic anhydride; adipic anhydride; succinic anhydride; alkyl succinic anhydrides; alkenyl succinic anhydrides; glutaric anhydride; alkyl glutaric anhydrides; alkenyl glutaric anhydrides; and, mixtures thereof. More preferably, the polyfunctional anhydride is an anhydride selected from the group consisting of: maleic anhydride; adipic anhydride; succinic anhydride; glutaric anhydride; and, mixtures thereof.

For completeness, the most suitable alkyl succinic anhydrides are those defined by the following general Formula A:

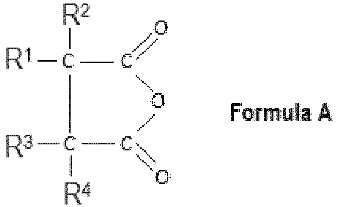

In which: R¹, R², R³ and R⁴ are independently selected from hydrogen and C₁-C₆ alkyl groups.

The most suitable alkenyl succinic anhydrides are those defined by general Formula B: 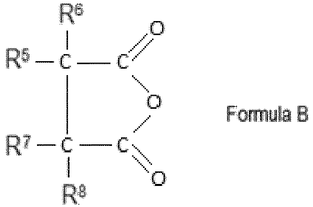 in which:
R⁵, R⁶ and R⁷ are independently selected from hydrogen and C₁-C₆ alkyl groups; and,
R⁸ is a C₄-C₂₀ alkenyl group.

By corollary, the most suitable alkyl glutaric anhydrides are those defined by the following general Formula C: 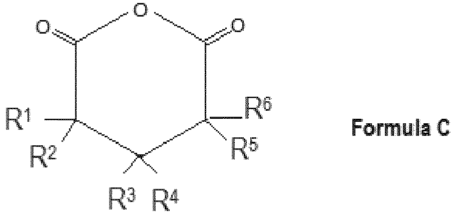 in which: R¹, R², R³, R⁴, R⁵ and R⁶ are independently selected from hydrogen and C₁-C₆ alkyl groups.

The most suitable alkenyl glutaric anhydrides are those 3-glutaric derivatives defined by general Formula D: 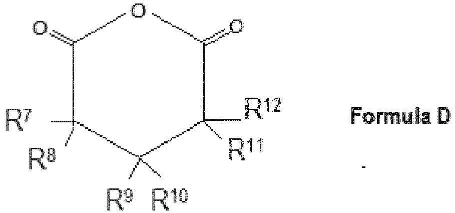 in which:
R⁷, R⁸, R⁹, R¹¹ and R¹² are independently selected from hydrogen and C₁-C₆ alkyl groups; and,
R¹⁰ is a C₄-C₂₀ alkenyl group.

The relative amounts of glycerine carbonate to polyfunctional anhydride can vary over a fairly broad range but a significant excess of the anhydride is undesirable because this reactant can be expensive and can be difficult to recover and re-use. Preferably, the anhydride: glycerine carbonate molar ratio is from 2:1 to 0.8:1, more preferably said molar ratio is within the range of 1.2:1 to 0.8:1 and most preferably said ratio is within the range of 1.1:1 to 0.9:1.

The first stage of the present invention may be carried out in any known and suitable vessel which is designed to contain the reactants, products and any solvents employed, including those vessels described in US Patent No. 4,310,708 (Strege et al.). The materials of the vessel should, of course, be inert under the conditions employed during the process stage.

Having regard to those conditions, this process stage may be performed at any suitable temperature. Whilst the optimum operating temperature for the reaction may be determined by the skilled artisan through experimentation, a suitable temperature range of from 60° to 180°C may be mentioned, with a preferred temperature range being from 80 to 150°C.

The process pressure is not critical. As such, the reaction can be run at sub-atmospheric, atmospheric, or super-atmospheric pressures but pressures at or above atmospheric pressure are preferred.

Good results have been obtained where the first stage reaction is performed under anhydrous conditions. If desired, exposure to atmospheric moisture may be avoided by providing the reaction vessel with an inert, dry gaseous blanket. Whilst dry nitrogen, helium and argon may be used as blanket gases, precaution should be used when common nitrogen gases are used as a blanket, because such nitrogen may not be dry enough on account of its susceptibility to moisture entrainment; the nitrogen may require an additional drying step before use herein.

The first reaction stage can also be performed in solvent-free conditions and indeed this is desirable. If employed, suitable solvents should be inert: they should contain no functional groups that react with the starting compounds. Mention may thus be made of: aromatic hydrocarbons, illustratively toluene or benzene; aliphatic hydrocarbon solvents having from 5 to 12 carbon atoms, such as heptane, hexane or octane; ethers such as diethyl ether, methyl ethyl ether, diisopropyl ether, dioxane and tetrahydrofuran; and, esters such as ethyl acetate, amyl acetate and methyl formate. Of these solvents, aromatic solvents are least preferred on account of their potential toxic associations.

There is no requirement to employ a catalyst in this reaction step and indeed catalyst-free conditions are desirable. However, the use of catalysts is not precluded and suitable catalysts - including titanium, zirconium and tin catalysts such as titanium, zirconium and tin alcoholates, carboxylates and chelates - are identified in *inter alia*: US Patent No. 3,056,818 (Werber); and, US Patent No. 5,969,056 (Nava). Further suitable catalysts include alkali or alkaline earth metal acetates, bicarbonates, carbonates, succinates, glutarates, adipates, oxides, hydroxides or mixtures thereof: it is mooted that sodium carbonate, potassium carbonate, sodium acetate, and potassium acetate are preferable as they are inexpensive, readily available, and effective. When used, the amount of catalyst is preferably from 0.05 to 5 wt.% or from 0.05 to 3 wt.%, based on the total amount of reacting compounds.

The reaction time to obtain adequate conversion of reactant anhydride will be dependent on various factors such as temperature, catalyst type and type of polyfunctional anhydride. The reaction can be monitored by analyzing the acid value (Av) of the reactant mixture over time and the reaction stopped when that determined acid value is constant at a value close to the theoretical acid value. Generally, the time which is sufficient for the reaction to take place will be from 2 to 20 hours, for instance from 4 to 8 hours or from 4 to 7 hours.

Having regard to the preferred embodiments of the anhydride reaction, an illustrative reaction scheme for the first step of the claimed process is as follows, wherein n is 1, 2 or 3:

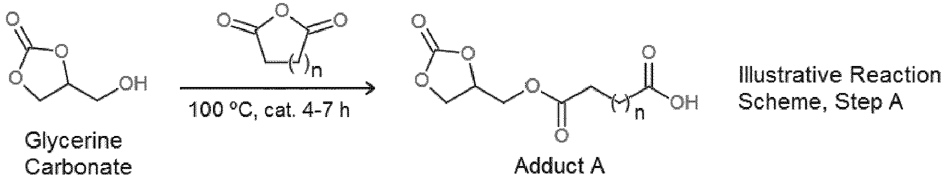

Adduct (A) produced in accordance with the first step of the present invention may be used as is or may be isolated and purified using methods known in the art: mention in this regard may be made of extraction, evaporation, distillation and chromatography.

### Reacting said Adduct (A) with at least one Polyepoxide Compound

The derived adduct (A) is reacted with at least one polyepoxide compound to form said cyclic carbonate functional polyester (CC-PES). Irrespective of the choice of polyepoxide compound, this reaction should be characterized in that the equivalence ratio of the carboxyl groups to the epoxy groups is at least 1:1 and is preferably in the range from 1.0:1 to 1.2:1 or from 1.0:1 to 1.1:1.

Whilst there is an acknowledged preference for selecting an epoxy functional polyester (Epoxy-PES) - derivable from stages B) and C) as described herein below - as the reactant, other polyepoxides may be used either alone or in combination with said epoxy functional polyester in this stage of the reaction.

Such suitable other polyepoxide compounds may be liquid, solid or in solution in solvent. Further, such polyepoxide compounds should have an epoxy equivalent weight of from 100 to 700 g/eq, for example from 120 to 320 g/eq. And generally, diepoxide compounds having epoxy equivalent weights of less than 500 or even less than 400 are preferred: this is predominantly from a costs standpoint, as in their production, lower molecular weight epoxy resins require more limited processing in purification.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C1-C18 alkyl esters; butadiene diepoxide; polybutadiene diglycidyl ether; vinylcyclohexene diepoxide; and, limonene diepoxide.

Illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

Without intention to limit the present invention, examples of highly preferred polyepoxide compounds include: bisphenol-A epoxy resins, such as DER™ 331, and DER™ 383; bisphenol-F epoxy resins, such as DER™ 354; bisphenol-A/F epoxy resin blends, such as DER™ 353; aliphatic glycidyl ethers, such as DER™ 736; polypropylene glycol diglycidyl ethers, such as DER™ 732; solid bisphenol-A epoxy resins, such as DER™ 661 and DER™ 664 UE; solutions of bisphenol-A solid epoxy resins, such as DER™ 671-X75; epoxy novolac resins, such as DEN™ 438; brominated epoxy resins such as DER™ 542; castor oil triglycidyl ether, such as ERISYS™ GE-35H; polyglycerol-3-polyglycidyl ether, such as ERISYS™ GE-38; and, sorbitol glycidyl ether, such as ERISYS™ GE-60.

Although the reaction of an epoxy group with a carboxyl group can proceed in the absence of a catalyst, basic catalysis is required here both to achieve acceptable reaction rates and the desired reaction product. Examples of suitable basic catalysts include but are not limited to: alkaline metal hydroxides, such as lithium hydroxide, sodium hydroxide, and potassium hydroxide; alkaline earth metal hydroxides, such as calcium hydroxide and magnesium hydroxide; alkali metal carbonates, such as sodium carbonate and potassium carbonate; sodium alcoholates, such as sodium methylate, sodium ethylate, and sodium butylate; quaternary ammonium hydroxides, such as benzyltrimethylammonium hydroxide and tetrabutylammonium hydroxide; ammonium salts as phase transfer catalysts, such as benzyltrimethylammonium chloride, benzyltriethylammonium chloride, methyltricaprylammonium chloride, methyltributylammonium chloride, methyltrioctylammonium chloride and tetra-n-octylammonium bromide; phosphonium salts as phase transfer catalysts, such as hexadecyltributylphosphonium bromide, tetramethylphosphonium bromide, tetraphenylphosphonium bromide, tetraphenylphosphonium chloride and trihexyltetradecylphosphonium bromide; and, strong basic ion-exchange resins. Whilst the skilled artisan can determine appropriate and optimum catalytic amounts of such compounds, it is submitted that the typical amount of catalyst is from 0.05 to 5 wt.% or from 0.05 to 3 wt.%, based on the total amount of reacting compounds.

Whilst the optimum operating temperature for this stage of the process may be determined by the skilled artisan through experimentation, a suitable temperature range of from 40° to 180°C may be mentioned, with a preferred temperature range being from 60° to 170°C or even 160°C. The process pressure is not critical: as such, the reaction can be run at sub-atmospheric, atmospheric, or super-atmospheric pressures but pressures at or above atmospheric pressure are preferred.

Good results have been obtained where this stage is performed under anhydrous conditions, wherein the reaction vessel has been provided with an inert, dry gaseous blanket of, for instance, dry nitrogen, helium or argon. It is also noted that this reaction stage should also desirably be performed in solvent-free conditions. If employed, suitable solvents should be inert: they should contain no reactive groups that react with the starting compounds.

The progress of the reaction can be monitored by analyzing the acid value (Av) of the reactant mixture over time: the reaction may be stopped when that determined acid value is at a value of less than 1 mg KOH/g. Generally, the time which is sufficient for the reaction to reach that point will be from 0.5 to 20 hours, for instance from 1 to 8 hours or from 2 to 6 hours.

Although this is not critical, the reaction product (CC-PES) may be separated and purified using methods known in the art: mention in this regard may be made again of extraction, evaporation, distillation and chromatography.

### Reacting said Cyclic Carbonate Functional Polyester (CC-PES) with an Amine

In the final synthesis stage of the present invention - denoted as step E in the mode of the invention described below - the cyclic carbonate functional polyesters (CC-PES) are reacted with at least one aliphatic, alicyclic, heterocyclic or aromatic amine containing at least two primary and / or secondary amine groups.

Suitable aromatic amines contain at least two primary or secondary amine groups bonded directly to at least one aromatic nucleus. And examples thereof include: 4,5-acenaphthenediamine; 3,5-diaminoacridine; 1,4-diaminoanthraquinone; 3,5-diaminobenzoic acid; 2,7-fluoroenediamine; 1,5-naphthalenediamine; 1,8-naphthalenediamine; 2,4-toluenediamine; 2,6-toluenediamine; o-phenylenediamine; m-phenylenediamine; and, p-phenylenediamine. However, the use of such aromatic amines is not preferred in the present invention: the reaction of the aromatic amine with the cyclic carbonate functional polymers often requires higher temperatures which can induce unwanted degradation of reactants and products.

Consequently, for use in this stage, more suitable reactant amines having at least two primary and / or secondary amine groups are selected from the group (AM) consisting of: C1 to C20, preferably C1 to C12 aliphatic amines; C4 to C20, preferably C4 to C12 alicyclic amines; and, C2 to C20, preferably C2 to C12 heterocyclic amines.

Exemplary aliphatic, alicyclic and heterocyclic amines within this group (AM) include, but are not limited to: ethylenediamine; 1,2-propanediamine; 1,3-propanediamine; 1,4-butanediamine; 2-methyl-1,2-propanediamine; 1,5-pentanediamine; 1,6-hexanediamine; 1,7-heptanediamine; 1,8-octanediamine; 1,10-decanediamine; 1,12-dodecane-diamine; diethylenetriamine; triethylenetetraamine; tetraethylenepentamine; bis(hexamethylene)triamine; 3,3'-iminobispropylamine; 1,2-diaminocyclohexane, *N*-Cyclohexyl-1,3-propanediamine; 1,8-p-menthanediamine; 4-(aminomethyl)piperidine; and, N-(aminoalkyl)piperazines, wherein each alkyl group contains from 1 to 12 or from 1 to 6 carbon atoms, for instance N-(2-aminoethyl)piperazine, N-(3-aminopropyl)-piperazine and N,N'-bis(3-aminopropyl)piperazine.

Having regard to the above mentioned group of reactant amines (AM), two statements of particular preference should be noted. Firstly, compounds having exactly two amine groups, which groups may be primary and / or secondary amine groups, are preferred. Secondly, but not mutually exclusively, compounds containing at least two primary and / or secondary amine groups having different reactivities are preferred. The presence of amine groups having different reactivities - in particular a primary amine group and a secondary amine group - makes the ring-opening and amine-functionalization (amine-termination) reaction more likely than the coupling of the polymers: a smaller excess of amine may then be used in order to avoid such coupling.

Examples of highly preferred amine reactants include: *N*-Cyclohexyl-1,3-propanediamine; 1,8-p-methanediamine; 4-(aminomethyl) piperidine; N-(2-aminoethyl)piperazine; and, N-(3-aminopropyl)-piperazine.

Good results have been obtained where this synthesis stage is performed under anhydrous conditions, wherein the reaction vessel has been provided with an inert, dry gaseous blanket of, for instance, dry nitrogen, helium or argon. It is also noted that this reaction stage should also desirably be performed in solvent-free conditions. Where employed, suitable solvents should be inert: they should contain no reactive groups that react with the starting compounds. As such solvents, mention may be made of: aliphatic and cycloaliphatic ethers containing from 3 to 10 carbon atoms, such as tetrahydrofuran and diethylether; halogenated aliphatic hydrocarbons containing from 1 to 10 carbon atoms such as chloroform, carbon tetrachloride, 1,2-dichloroethylene, trichloroethylene and tetrachloroethylene; esters containing from 3 to 10 carbon atoms such as ethyl acetate, n-butyl acetate, hexyl acetate, benzyl acetate, methyl propionate and ethyl propionate; and, aromatic solvents such as benzene, chlorobenzene, toluene, o-, m- and p-xylene, o-, m- and p-diethylbenzene, cumene and mesitylene.

A sufficient quantity of the at least one amine may be reacted with the cyclic carbonate functional polyesters (CC-PES) to produce a multifunctional polymer (MF-PES) which is characterized by containing amine functional groups. The total amount of amine added is preferably selected so that there is at least a 2:1 equivalence ratio of amine groups to 1,3-dioxolan-2-one groups of said functional polyesters (CC-PES). An equivalence ratio of amine to 1,3-dioxolan-2-one groups of (2.0 - 2.4):1 or (2.0 - 2.2):1 may be appropriate.

An additional but not mutually exclusive statement of preference as regards the reactant ratios may be as follows. As noted above, the reactant amine of this process step may desirably be a polyamine, in particular a diamine, having at least one primary amine group and at least one secondary amine group. In this preferred embodiment, the total amount of amine added is selected so that there is at least a 1:1 equivalence ratio of primary amine groups to 1,3-dioxolan-2-one groups of said functional polyesters (CC-PES). An equivalence ratio of primary amine groups to 1,3-dioxolan-2-one groups of (1.0 - 1.2):1 or (1.0 - 1.1):1 may be appropriate.

The reaction of Stage E does not require a catalyst but should be conducted under stirring in an appropriate mixer. Whilst the optimum operating temperature for stage E of the process may be determined by the skilled artisan through experimentation, a suitable temperature range of from 60° to 150°C may be mentioned, with a preferred temperature range being from 90° to 120°C or even 110°C. The process pressure is not critical: as such, the reaction can be run at sub-atmospheric, atmospheric, or super-atmospheric pressures but pressures at or above atmospheric pressure are preferred.

The progress of the reaction can be followed by analyzing the amine content quantitatively in accordance with the procedure described by Siggia et al. Quantitative Organic Analysis via Functional Groups, Wiley and Sons, Inc., 1963, pp. 452-456. The progress of the reaction and the achievement of full conversion can in the alternative be monitored through both NMR and Infrared (IR). Generally, the time which is sufficient for the reaction to reach completion will be from 0.5 to 4 hours, for instance from 1 to 3 hours.

Having regard to its preferred embodiments, an illustrative reaction scheme for this step of the claimed process is as follows:

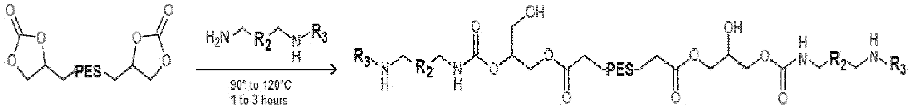

As denoted in the above reaction scheme, the product (MF-PES) bears amine functional groups but may be described as a multifunctional polyester-polyol-amine.

The product of stage E (MF-PES) may be separated and purified using methods known in the art: mention in this regard may be made again of extraction, evaporation, distillation and chromatography. As is known in the art, the amine content of the derived polymers (MF-PES) can be analyzed quantitatively by infrared spectroscopy.

### Detailed Description of a Mode of the Invention

In an important embodiment, the method of preparing the multifunctional polyester comprises the stages: A) reacting glycerine carbonate with an anhydride to form an Adduct (A), as described herein above; B) providing a polycarboxylic acid; C) reacting said polycarboxylic acid with at least one diglycidyl ether to form an epoxy functional polyester; D) reacting said epoxy functional polyester with said Adduct (A) to form a cyclic carbonate functional polyester (CC-PES); E) reacting said cyclic carbonate functional polyesters with at least one aliphatic, alicyclic, heterocyclic or aromatic amine containing at least two primary and / or secondary amine groups, as described herein above.

It is noted that the reaction stages B to E may be independently performed in one or more suitable vessels. In this instance, the intermediate reaction products formed after stages B, C and D respectively may be isolated and / or purified using methods known in the art, such as extraction, evaporation, distillation and chromatography. This methodology is not however preferred. Desirably, the stages B to E are carried out in one vessel sequentially; this "one-pot" solution obviates the need for intermediate separation and purification steps. Moreover, it is preferred that Stages B to E are each performed under conditions which are essentially free of solvent.

### Stage B

Stage B of this mode of the invention consists of providing a polycarboxylic acid. In general, any polycarboxylic acid in which the carboxylic acid groups are separated by a bivalent hydrocarbon group which may be saturated or unsaturated, aliphatic, aromatic or cycloaliphatic or which may have two or more aliphatic, aromatic or cycloaliphatic moieties, can be used. A preference for dicarboxylic acids and tricarboxylic acids might be mentioned, with the former being particularly preferred. Moreover, preferred polycarboxylic acids should generally be characterized by an acid value (Av) of from 50 to 1200 mgKOH/g, for example from 80 to 1100 mgKOH/g.

Exemplary suitable dicarboxylic acids include: phthalic acid; isophthalic acid (IA); terephthalic acid; orthophthalic acid; naphthalene dicarboxylic acid; 1,3- and 1,4-cyclohexane dicarboxylic acid; p-phenylene diacetic acid; sebacic acid (SeA); brassylic acid; maleic acid; fumaric acid; oxalic acid; succinic acid; itaconic acid; adipic acid; beta-methyl adipic acid; trimethyl adipic acid, glutaric acid; azelaic; malonic; suberic acid; pimelic acid; dodecanedioic acid; dimer fatty acid; and, mixtures thereof.

Exemplary suitable tricarboxylic acids include: citric acid; aconitic acid; 1,3,5-pentanetricarboxylic acid; 1,2,3-propanetricarboxylic acid; 1,2,3,4-butanetetracarboxylic acid; 1,2,4-benzenetricarboxylic; and, 1,3,5-benzenetricarboxylic.

In a particularly preferred embodiment of the invention, the polycarboxylic acid of Stage B is a carboxyl functional polyester (Carboxy-PES), which polymer may preferably be characterized by an acid value (Av) of from 50 to 500 mgKOH/g, preferably from 80 to 430 mgKOH/g.

The carboxyl functional polyesters (Carboxy-PES) of this embodiment are obtainable by the reaction of: (i) at least one aromatic, aliphatic or cycloaliphatic dicarboxylic acid or the anhydride thereof; ii) at least one diol compound, more particularly a compound having two aliphatic hydroxyl groups which may each independently be a primary or a secondary hydroxyl group.

Suitable dicarboxylic acids include saturated, unsaturated, aliphatic, cycloaliphatic or aromatic dicarboxylic acids and / or anhydrides. Exemplary dicarboxylic acids are: phthalic acid; isophthalic acid; terephthalic acid; orthophthalic acid; naphthalene dicarboxylic acid; 1,3- and 1,4-cyclohexane dicarboxylic acid; p-phenylene diacetic acid; sebacic acid; brassylic acid; maleic acid; fumaric acid; succinic acid; itaconic acid; adipic acid; beta-methyl adipic acid; trimethyl adipic acid, glutaric acid; azelaic; malonic; suberic acid; dodecanedioic acid; and, mixtures thereof. Preferably, the dicarboxylic acids or anhydrides of dicarboxylic acids will have from 4 to 12 carbon atoms.

Suitable diols having two aliphatic hydroxyl groups may have a molecular weight of 62 to 5000 and may optionally contain ether groups, ester groups and / or carbonate groups. Exemplary aliphatic diols are: ethylene glycol; 1,2-propanediol; 2-methyl-1,3-propanediol; 1,3- and 1,4-butanediol; 1,6-hexanediol; diethylene glycol; dipropylene glycol; neopentyl glycol; triethylene glycol; tetraethylene glycol; tripropylene glycol; tetrapropylene glycol; polycarbonate diols; polyester diols; dimeric fatty alcohols; and, mixtures thereof.

The use of further reactants in the derivation of the carboxyl functional polyesters (Carboxy-PES) is not precluded and mention in this regard may be made of: iii) dihydroxymonocarboxylic acids in which each hydroxyl group may independently be primary or secondary hydroxyl; iv) trifunctional and / or tetrafunctional hydroxy compounds, comprising respectively three four aliphatic hydroxyl groups which may each independently be a primary or secondary hydroxyl group, such as trimethylolethane, trimethylolpropane, hexanetriol or pentaerythritol.

It will be apparent to a person of ordinary skill in the art that there are a plurality of alternative ways in which to synthesize carboxyl functional polyesters (Carboxy-PES) from said reactants and, as such, there is no intention to limit the present invention to a single one of those ways. However, certain preferred synthesis methods will be discussed herein below.

In a first method, a hydroxyl functional polyester may be reacted with carboxylic acids or their anhydrides to form the carboxyl functional polyester. This first method may be constituted by a two stage process: in the first stage, a dicarboxylic acid and a diol are reacted to form a hydroxyl-functional pre-polymer, under conditions for water removal; in the second stage, that pre-polymer is reacted with carboxylic acids or their anhydrides. The conditions for water removal will typically be constituted by one or more of: a temperature of from 120° to 250°C; the application of a vacuum; and, the use of solvents to facilitate azeotropic distillation.

The amount of acid or anhydride reagent used is determined by the hydroxyl number of the polyester or intermediate pre-polymer in the case of the two stage process, which hydroxyl number is desirably from 50 to 300 mgKOH/g and preferably from 80 to 150 mgKOH/g. Generally from 80 to 100% of the stoichiometric amount required to cap all of the hydroxyl functional groups of the polyester is generally added. The reagent is added to the hydroxyl functional polyester or pre-polymer and the esterification is continued until a desired acid number (Av) is obtained. Usually, the total reaction time will be from 5 to 15 hours.

A conventional catalyst for the promotion of an esterification reaction can be employed in the (end-capping) reaction and, if applicable, in one or both of the first and second stages. Catalysts, which may be used in an amount of from 0.01 to 1 wt.%, for example from 0.01 to 0.5 wt.%, based on the combined weight of the reactants, will typically be compounds of tin, antimony, titanium or zirconium. Mention in this regard may be made of: titanium alkoxides and derivatives thereof, such as tetraethyl titanate, tetra isopropyl titanate (TIPT), tetra n-propyl titanate, tetra n-butyl titanate, tetra(2-ethylhexyl) titanate, isopropyl butyl titanate, tetrastearyl titanate, diisopropoxy-bis(acetylacetonato) titanium, di-n-butoxy-bis(triethanolaminoato)titanium, tributyl monoacetyltitanate triisopropyl monoacetyltitanate and tetrabenzoic acid titanate; titanium complex salts, such as alkali titanium oxalates and malonates, potassium hexafluorotitanate and titanium complexes with hydroxycarboxylic acids such as tartaric acid, citric acid or lactic acid; titanium dioxide / silicon dioxide co-precipitates; hydrated alkaline-containing titanium dioxide; and, the corresponding zirconium compounds.

In accordance with a second desired method of synthesizing the carboxyl functional polyesters (Carboxy-PES), a stoichiometric excess of the dicarboxylic acid is reacted with at least one diol in the presence of a catalytic amount of an esterification catalyst, such as those mentioned above. The stoichiometric excess of dicarboxylic acid should be sufficient to achieve the desired ester linkages and to have additional carboxyl groups to yield the terminal carboxyl groups. Further, such a polycondensation reaction should be performed under conditions for water removal.

### Stage C

In this stage of the process of the present invention, the polycarboxylic acids - where applicable being carboxyl functional polyesters (Carboxy-PES) - are reacted with one or more diglycidyl ether compounds to yield an epoxy functional polyester (Epoxy-PES). Broadly, suitable diglycidyl ether compounds may be liquid, solid or in solution in solvent. Said diglycidyl ether compounds may be aromatic, aliphatic or cycloaliphatic in nature and, as such, can be derivable from dihydric phenols and dihydric alcohols. And useful classes of such diglycidyl ethers (epoxy resins) are: diglycidyl ethers of aliphatic and cycloaliphatic diols, such as 1,4-butanediol, 1,6-hexanediol, 1,8-octanediol, 1,12 -dodecanediol, cyclopentane diol and cyclohexane diol; bisphenol A based diglycidylethers; bisphenol F diglycidyl ethers; polyalkyleneglycol based diglycidyl ethers, in particular polypropyleneglycol diglycidyl ethers; and, polycarbonatediol based glycidyl ethers.

It is preferred that the diglycidyl ethers compounds have an epoxy equivalent weight of from 100 to 700 g/eq, for example from 120 to 320 g/eq. Generally, diglycidyl ethers compounds having epoxy equivalent weights of less than 500 or even less than 400 are preferred: this is predominantly from a costs standpoint, as in their production, lower molecular weight epoxy resins require more limited processing in purification.

Without intention to limit the present invention, examples of suitable epoxy resins include: bisphenol-A epoxy resins, such as DER™ 331, and DER™ 383; bisphenol-F epoxy resins, such as DER™ 354; bisphenol-A/F epoxy resin blends, such as DER™ 353; aliphatic glycidyl ethers, such as DER™ 736; polypropylene glycol diglycidyl ethers, such as DER™ 732; solid bisphenol-A epoxy resins, such as DER™ 661 and DER™ 664 UE; solutions of bisphenol-A solid epoxy resins, such as DER™ 671-X75; epoxy novolac resins, such as DEN™ 438; brominated epoxy resins such as DER™ 542; castor oil triglycidyl ether, such as ERISYS™ GE-35H; polyglycerol-3-polyglycidyl ether, such as ERISYS™ GE-38; and, sorbitol glycidyl ether, such as ERISYS™ GE-60.

The molar ratio of the diglycidyl ether compounds to the carboxyl functional polyesters (Carboxy-PES) should preferably be from 1.5:1 to 3:1 and more preferably from 1.8: 1 to 2.2:1.

Although the reaction of an epoxy group with a carboxyl group can proceed in the absence of a catalyst, basic catalysis is required here both to achieve acceptable reaction rates and an acceptable yield of the desired reaction product. Examples of suitable basic catalysts for Stage C include but are not limited to: alkaline metal hydroxides, such as lithium hydroxide, sodium hydroxide, and potassium hydroxide; alkaline earth metal hydroxides, such as calcium hydroxide and magnesium hydroxide; alkali metal carbonates, such as sodium carbonate and potassium carbonate; sodium alcoholates, such as sodium methylate, sodium ethylate, and sodium butylate; quaternary ammonium hydroxides, such as benzyltrimethylammonium hydroxide and tetrabutylammonium hydroxide; ammonium salts as phase transfer catalysts, such as benzyltrimethylammonium chloride, benzyltriethylammonium chloride, methyltricaprylammonium chloride, methyltributylammonium chloride, methyltrioctylammonium chloride and tetra-n-octylammonium bromide; phosphonium salts as phase transfer catalysts, such as hexadecyltributylphosphonium bromide, tetramethylphosphonium bromide, tetraphenylphosphonium bromide, tetraphenylphosphonium chloride and trihexyltetradecylphosphonium bromide; and, strong basic ion-exchange resins. Whilst the skilled artisan can determine appropriate and optimum catalytic amounts of such compounds, it is submitted that the typical amount of catalyst is from 0.05 to 5 wt.% or from 0.05 to 3 wt.%, based on the total amount of reacting compounds.

Whilst the optimum operating temperature for Stage C of the process may be determined by the skilled artisan through experimentation, a suitable temperature range of from 40° to 180°C may be mentioned, with a preferred temperature range being from 60° to 170°C or even 160°C. The process pressure is not critical: as such, the reaction can be run at sub-atmospheric, atmospheric, or super-atmospheric pressures but pressures at or above atmospheric pressure are preferred.

Good results have been obtained where this stage is performed under anhydrous conditions, wherein the reaction vessel has been provided with an inert, dry gaseous blanket of, for instance, dry nitrogen, helium or argon. It is also noted that this reaction stage should also desirably be performed in solvent-free conditions. If employed, suitable solvents should be inert: they should contain no reactive groups that react with the starting compounds.

The progress of the epoxidation reaction can be monitored by analyzing the acid value (Av) of the reactant mixture over time: the reaction may be stopped when that determined acid value is at a value of less than 1 mg KOH/g. Generally, the time which is sufficient for the epoxidation reaction to take place will be from 0.5 to 20 hours, for instance from 1 to 8 hours or from 2 to 6 hours.

Having regard to the preferred embodiments of the epoxidation reaction, an illustrative reaction scheme for the first step of the claimed process is as follows: 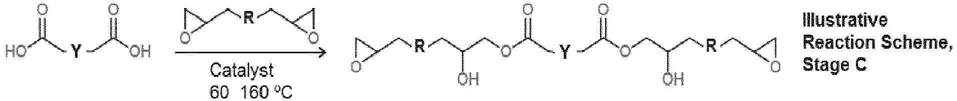 in which: R is the residue of a dihydric phenol or dihydric alcohol; and, Y is a polyester (PES) or the residue of a polycarboxylic acid.

### Stage D

In this stage of the process, the Adduct (A) of Stage A is reacted with the epoxy functional polyester (Epoxy-PES) obtained from Stage C. Through this reaction, a polyester having terminal cyclic carbonate groups (CC-PES) is obtained.

The adduct should be added to the reaction medium in an amount sufficient to ensure that there is at least a 1:1 equivalent ratio of carboxylic acid groups to epoxy groups. This may equate to a molar ratio of the Adduct (A) to the epoxy functional polyester (Epoxy-PES) being in the range from 2:1 to 3:1 and more preferably from 2: 1 to 2.5:1.

Although the reaction of an epoxy group with a carboxyl group can proceed in the absence of a catalyst, basic catalysis is required here both to achieve acceptable reaction rates and the desired reaction product. Examples of suitable basic catalysts for Stage D include but are not limited to: alkaline metal hydroxides, such as lithium hydroxide, sodium hydroxide, and potassium hydroxide; alkaline earth metal hydroxides, such as calcium hydroxide and magnesium hydroxide; alkali metal carbonates, such as sodium carbonate and potassium carbonate; sodium alcoholates, such as sodium methylate, sodium ethylate, and sodium butylate; quaternary ammonium hydroxides, such as benzyltrimethylammonium hydroxide and tetrabutylammonium hydroxide; ammonium salts as phase transfer catalysts, such as benzyltrimethylammonium chloride, benzyltriethylammonium chloride, methyltricaprylammonium chloride, methyltributylammonium chloride, methyltrioctylammonium chloride and tetra-n-octylammonium bromide; phosphonium salts as phase transfer catalysts, such as hexadecyltributylphosphonium bromide, tetramethylphosphonium bromide, tetraphenylphosphonium bromide, tetraphenylphosphonium chloride and trihexyltetradecylphosphonium bromide; and, strong basic ion-exchange resins. Whilst the skilled artisan can determine appropriate and optimum catalytic amounts of such compounds, it is submitted that the typical amount of catalyst is from 0.05 to 5 wt.% or from 0.05 to 3 wt.%, based on the total amount of reacting compounds.

Whilst the optimum operating temperature for stage D of the process may be determined by the skilled artisan through experimentation, a suitable temperature range of from 40° to 180°C may be mentioned, with a preferred temperature range being from 60° to 170°C or even 160°C. The process pressure is not critical: as such, the reaction can be run at sub-atmospheric, atmospheric, or super-atmospheric pressures but pressures at or above atmospheric pressure are preferred.

Good results have been obtained where this stage is performed under anhydrous conditions, wherein the reaction vessel has been provided with an inert, dry gaseous blanket of, for instance, dry nitrogen, helium or argon. It is also noted that this reaction stage should also desirably be performed in solvent-free conditions. If employed, suitable solvents should be inert: they should contain no reactive groups that react with the starting compounds.

The progress of the reaction can be monitored by analyzing the acid value (Av) of the reactant mixture over time: the reaction may be stopped when that determined acid value is at a value of less than 1 mg KOH/g. Generally, the time which is sufficient for the reaction to reach that point will be from 0.5 to 20 hours, for instance from 1 to 8 hours or from 2 to 6 hours.

Having regard to its preferred embodiments, an illustrative reaction scheme for this step of the claimed process is as follows: 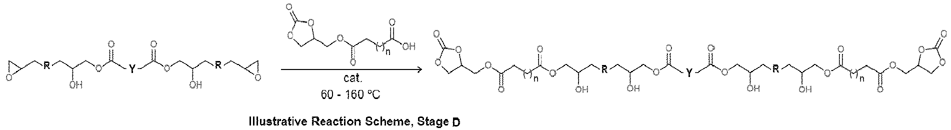 in which: R is the residue of a dihydric phenol or dihydric alcohol; Y is a polyester (PES) or the residue of a polycarboxylic acid; and, n is 1, 2 or 3.

The product of stage D (CC-PES) may be separated and purified using methods known in the art: mention in this regard may be made again of extraction, evaporation, distillation and chromatography. The optionally purified cyclic carbonate functional polyester is then reacted with at least one aliphatic, alicyclic, heterocyclic or aromatic amine containing at least two primary and / or secondary amine groups as described above, thereby yielding the amino- and hydroxyl-functional polyester (denoted as MF-PES below).

### Coating, Sealant and Adhesive Compositions

As mentioned hereinbefore, the amino- and hydroxyl-functional polyesters (MF-PES) obtained using the process of the present invention can be employed as a reactive component of a curable coating, adhesive or sealant composition. The further reactant(s) of such compositions will generally be one or more multifunctional compounds (H) having at least two functional groups (F) selected from the group consisting of: (i) activated unsaturated groups, such as (meth)acryloyl groups; (ii) activated methylene groups, such as acetoacetate and malonate groups; (iii) epoxy groups; (iv) isocyanate groups; (v) aromatic activated aldehyde groups; (vi) cyclic carbonate groups; and, (vii) acid, anhydride and ester groups, including oxalate esters. Latent compounds, in which the functional groups (F) are blocked but which are activatable under specific physicochemical conditions, are also envisaged as suitable further reactants for the coating, adhesive or sealant compositions.

No particular limitation is imposed on the number of functional groups (F) possessed by the (activated) compound (H): compounds having 2, 3, 4, 5, 6, 7, 8, 9 or 10 functional groups may be used, for instance. Moreover, the reactant compound (H) can be a low-molecular-weight substance - that is its molecular weight is less than 500 g/mol - or an oligomeric or polymeric substance that has a number average molecular weight (Mn) above 500 g/mol. And, of course, mixtures of compounds (H) may be used.

In an embodiment, the reactant compound (H) having at least two functional groups is selected from the group consisting of: polyepoxide compounds; cyclic carbonates; and, polyisocyanates.

Suitable polyepoxide compounds may be liquid, solid or in solution in solvent. Further, such polyepoxide compounds should have an epoxy equivalent weight of from 100 to 700 g/eq, for example from 120 to 320 g/eq. And generally, diepoxide compounds having epoxy equivalent weights of less than 500 or even less than 400 are preferred.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C1-C18 alkyl esters; butadiene diepoxide; polybutadiene diglycidyl ether; vinylcyclohexene diepoxide; and, limonene diepoxide.

Illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

Without intention to limit the present invention, examples of highly preferred polyepoxide compounds for use as compound (H) include: bisphenol-A epoxy resins, such as DER™ 331, and DER™ 383; bisphenol-F epoxy resins, such as DER™ 354; bisphenol-A/F epoxy resin blends, such as DER™ 353; aliphatic glycidyl ethers, such as DER™ 736; polypropylene glycol diglycidyl ethers, such as DER™ 732; solid bisphenol-A epoxy resins, such as DER™ 661 and DER™ 664 UE; solutions of bisphenol-A solid epoxy resins, such as DER™ 671-X75; epoxy novolac resins, such as DEN™ 438; brominated epoxy resins such as DER™ 542; castor oil triglycidyl ether, such as ERISYS™ GE-35H; polyglycerol-3-polyglycidyl ether, such as ERISYS™ GE-38; and, sorbitol glycidyl ether, such as ERISYS™ GE-60.

As examples of suitable cyclic carbonate group-containing monomeric and oligomeric compounds may be mentioned: compounds produced by reacting hydroxyl-functional cyclocarbonates with a polyisocyanate; and, compounds produced by the addition of CO₂ to an epoxy group-containing monomer or oligomer. The disclosures of the following citations may be instructive in disclosing suitable cyclic carbonate functional compounds: US Patent No. 3,535,342; US Patent No. 4,835,289; US Patent No. 4,892,954; UK Patent No. GB-A-1,485,925; and, EP-A-0 119 840.

The total amount of compounds (H) present in the curable composition is preferably selected so that the molar ratio of amine groups of said functional polyesters (MF-PES) to the functional groups (F) is in the range of from 1:10 to 10:1, for example from 5:1 to 1:5, and is preferably in the range of from 1:2 to 2:1. For example, the molar ratio of amine groups of said functional polyesters (MF-PES) to either epoxy groups or cyclic carbonate groups in the hardening compound (H) may be from 1:2 to 3:2 or from 2:3 to 4:3.

In an alternative expression of the composition, the total amount of compounds (H) is suitably from 0.1-50 wt.%, preferably from 0.5 to 40 wt.% and more preferably 1 to 30 wt.%, based on the combined total amount of the amino- and hydroxyl-functional polyesters (MF-PES) and the compounds (H).

As is standard in the art, the curable composition may comprise additives and adjunct ingredients. Suitable additives and adjunct ingredients include: catalysts; antioxidants; UV absorbers/light stabilizers; metal deactivators; antistatic agents; reinforcers; fillers; antifogging agents; propellants; biocides; plasticizers; lubricants; emulsifiers; dyes; pigments; rheological agents; impact modifiers; adhesion regulators; optical brighteners; flame retardants; anti-drip agents; nucleating agents; wetting agents; thickeners; protective colloids; defoamers; tackifiers; solvents; reactive diluents; and, mixtures thereof. The selection of suitable conventional additives for the composition depends on the specific intended use thereof and can be determined in the individual case by the skilled artisan.

In certain embodiments of the invention, no catalysts will be required to catalyze the reaction of the cyclic amine groups with the functional groups (F) of the compound (H): this may typically be the case where cyclic carbonate groups or epoxy groups are present as the functional groups (F). However, in other cases and preferably where the compound (H) has reactive groups F that are different from said cyclic carbonate or epoxy groups, a catalyst may be required: suitable catalysts for the hardening will then be determined in a known manner dependent upon the type of the reactive functional groups (F). The catalysts, when desired, are used in an amount of from 0.01 to 10 wt.%, preferably from 0.01 to 5 wt.%, based on the total weight of the curable composition.

The curable coating, adhesive or sealant composition should comprise less than 5 wt.% of water, based on the weight of the composition, and is most preferably an anhydrous composition that is essentially free of water. These embodiments do not preclude the composition from either comprising organic solvent or being essentially free of organic solvent.

Broadly, all organic solvents known to the person skilled in the art can be used as a solvent but it is preferred that said organic solvents are selected from the group consisting of: esters; ketones; halogenated hydrocarbons; alkanes; alkenes; and, aromatic hydrocarbons. Exemplary solvents are methylene chloride, trichloroethylene, toluene, xylene, butyl acetate, amyl acetate, isobutyl acetate, methyl isobutyl ketone, methoxybutyl acetate, cyclohexane, cyclohexanone, dichlorobenzene, diethyl ketone, di-isobutyl ketone, dioxane, ethyl acetate, ethylene glycol monobutyl ether acetate, ethylene glycol monoethyl acetate, 2-ethylhexyl acetate, glycol diacetate, heptane, hexane, isobutyl acetate, isooctane, isopropyl acetate, methyl ethyl ketone, tetrahydrofuran or tetrachloroethylene or mixtures of two or more of the recited solvents.

### Methods and Applications

To form a coating, sealant or adhesive composition, the reactive compounds are brought together and mixed in such a manner as to induce the hardening of the binder. More particularly, the amino- and hydroxyl-functional polyesters (MF-PES) and the compounds (H) may be mixed in pre-determined amounts by hand, by machine, by (co-)extrusion or by any other means which can ensure fine and highly homogeneous mixing thereof.

The hardening of the binder compositions of the invention typically occurs at temperatures in the range of from -10°C to 150°C, preferably from 0°C to 100°C, and in particular from 10°C to 70°C. The temperature that is suitable depends on the specific compounds (H) and the desired hardening rate and can be determined in the individual case by the skilled artisan, using simple preliminary tests if necessary. Of course, hardening at temperatures of from 5°C to 35°C or from 20°C to 30°C is especially advantageous as it obviates the requirement to substantially heat or cool the mixture from the usually prevailing ambient temperature. Where applicable, however, the temperature of the mixture of the amino- and hydroxyl-functional polyesters (MF-PES) and the compounds (H) may be raised above the mixing temperature using conventional means, including microwave induction.

The compositions according to the invention may find utility *inter alia* in: varnishes; inks; elastomers; foams; binding agents for fibers and / or particles; the coating of glass; the coating of mineral building materials, such as lime- and / or cement-bonded plasters, gypsum-containing surfaces, fiber cement building materials and concrete; the coating and sealing of wood and wooden materials, such as chipboard, fiber board and paper; the coating of metallic surfaces; the coating of asphalt- and bitumen-containing pavements; the coating and sealing of various plastic surfaces; and, the coating of leather and textiles.

It is also considered that the compositions of the present invention are suitable as pourable sealing compounds for electrical building components such as cables, fiber optics, cover strips or plugs. The sealants may serve to protect those components against the ingress of water and other contaminants, against heat exposure, temperature fluctuation and thermal shock, and against mechanical damage.

By virtue of the fact that the compositions of the present invention are capable of creating a high binding strength in a short time, often at room temperature - particularly where epoxy or cyclic carbonate hardeners (H) are employed - the compositions are optimally used for forming composite structures by surface-to-surface bonding of the same or different materials to one another. The binding together of wood and wooden materials and the binding together of metallic materials may be mentioned as exemplary adhesive applications of the present compositions.

In a particularly preferred embodiment of the invention, the curable compositions are used as solvent-free or solvent-containing lamination adhesives for gluing plastic and polymeric films, such as polyolefin films, poly(methylmethacrylate) films, polycarbonate films and Acrylonitrile Butadiene Styrene (ABS) films.

In each of the above described applications, the compositions may applied by conventional application methods such as: brushing; roll coating using, for example, a 4-application roll equipment where the composition is solvent-free or a 2-application roll equipment for solvent-containing compositions; doctor-blade application; printing methods; and, spraying methods, including but not limited to air-atomized spray, air-assisted spray, airless spray and high-volume low-pressure spray. For coating and adhesive applications, it is recommended that the compositions be applied to a wet film thickness of from 10 to 500 µm. The application of thinner layers within this range is more economical and provides for a reduced likelihood of thick cured regions that may - for coating applications - require sanding. However, great control must be exercised in applying thinner coatings or layers so as to avoid the formation of discontinuous cured films.

Various features and embodiments of the disclosure are described in the following examples, which are intended to be representative and not limiting.

### EXAMPLES

The following materials are employed in the Examples:

| | |
|---|---|
| DER 732: | Liquid Epoxy Resin, a reaction product of epichlorohydrin and polypropylene glycol; available from The Dow Chemical Company. |
| DER 331: | Liquid Epoxy Resin, a reaction product of epichlorohydrin and bisphenol A; available from The Dow Chemical Company. |
| TIPT: | Tetra Isopropyl Titanate, available from Connect Chemicals. |
| TEAB: | Tetraethyl ammonium bromide, available from Sigma-Aldrich. |
| ERISYS™ GE-35H: | Castor Oil Triglycidyl Ether, available from CVC Thermoset Specialties. |
| ERISYS™ GE-60: | Sorbitol Glycidyl Ether, available from CVC Thermoset Specialties. |
| Dianol^{®} 320 HP: | Polyether diol containing secondary hydroxyl groups having a hydroxyl value of 325mgKOH/g, available from Arkema Inc. |
| Baxx: | N-Cyclohexyl-1,3-propanediamine, available from TCI America. |
| 2-AMP: | 2-(Aminomethyl)piperidine, available from Sigma-Aldrich. |
| PEI: | Polyethylenimine having a weight average molecular weight (Mw) of 800 g/mol, available from Sigma-Aldrich. |

### Example 1a: Reaction between Glycerine Carbonate and Glutaric Anhydride (GC-Glut)

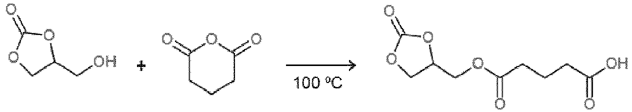

Glycerine carbonate (254 g) and glutaric anhydride (251 g) were stirred in a round bottom flask at 100 °C, under N₂ atmosphere. The 100% conversion - or, specifically, the addition of glycerine carbonate to glutaric anhydride - was observed after 9 hours, when the determined acid value (Av) was constant at a value close to the theoretical one (theoretical Av = 242 mg KOH/g; experimental Av = 252 mg KOH/g).

### Example 1b: Reaction between Glycerine Carbonate and Succinic Anhydride (GC-Succ)

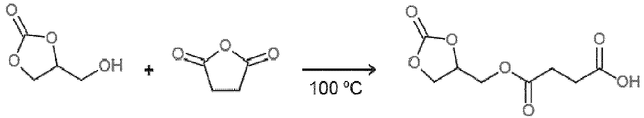

Glycerine carbonate (135 g) and succinic anhydride (115 g) were stirred in a round bottom flask at 100 °C, under N₂ atmosphere. The 100% conversion - addition of glycerine carbonate to succinic anhydride - was observed after 8 hours, when the determined acid value was constant at a value close to the theoretical one (theoretical Av = 257 mg KOH/g; experimental Av = 268 mg KOH/g).

### Example 2: Synthesis of Carboxy-Terminated Polyesters (Carboxy-PESs)

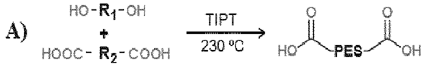

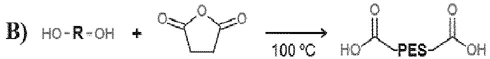

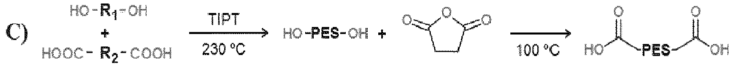

Procedure A: In a 3 neck round bottom flask and under N₂ atmosphere, a mixture of di-acids, glycols (with an excess of di-acids) and the catalyst TIPT (0.02 wt.%) was heated up to 230 °C and stirred. When no more water was observed, a vacuum was applied to force the reaction evolution. The reaction is finished when the determined acid value (Av) is constant at a value close to the theoretical one.

Procedure B: In a 3 neck round bottom flask and under N₂ atmosphere, a mixture of glycols and succinic anhydride was heated up to 100 °C and stirred. The reaction mixture is kept at these conditions until the determined acid value (Av) is constant at a value close to the theoretical one.

Procedure C: In a 3 neck round bottom flask and under N₂ atmosphere, a mixture of di-acids, glycols (with an excess of glycols) and the catalyst TIPT (0.02 wt.%) was heated up to 230 °C and stirred. When no more water is observed, a vacuum was applied to force the reaction evolution. The reaction is finished when the Av is < 3 mg KOH/g. Then, the temperature of the reaction mixture is reduced to 100 °C and succinic anhydride is added. The reaction mixture is kept at these conditions until the determined acid value (Av) is constant at a value close to the theoretical one.

Table 1 herein below describes specific Carboxy-PES's obtained by the above described procedures using the identified reactants and amounts thereof.

**Table 1: Carboxy-PESs**

| **Polyester** | Sebacic Acid (SeA, g) | Isophthalic Acid (IA, g) | Tripropylene glycol (TPG, g) | Dianol 320 (g) | Glycerol (g) | Succinic Anhydride (g) | Determined Constant Acid Value (Av, mg KOH/g) |
|---|---|---|---|---|---|---|---|
| **C1** | 217 | 45 | 174 | | | | 110.4 |
| **C2** | 29 | 87 | 169 | | | 31 | 74.2 |
| **C3** | | | 147 | | | 153 | 299.2 |
| **C4** | | | | 191 | | 110 | 215.2 |
| **C5** | | | | | 70 | 230 | 450.5 |

### Example 3: Synthesis of Epoxy-Functional Polyesters (Epoxy-PESs).

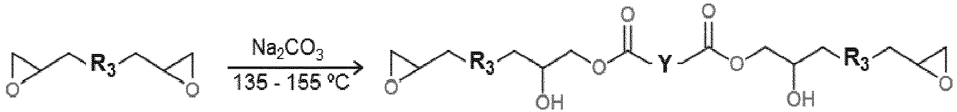

Procedure: In a 3 neck round bottom flask and under N₂ atmosphere, a mixture of di-acids, carboxy-PESs, epoxy resins and the catalyst Na₂CO₃ (0.02 wt.%) was heated up slowly to 135 °C and stirred during 30 minutes. After that, the reaction mixture was heated up to 155 °C and maintained at those conditions until the measured acid value (Av) was lower than 1 mg KOH/g.

The reactants used and the properties of six Epoxy-PESs made according to this procedure are given in Table 2 herein below.

**Table 2: Epoxy-PESs**

| **Epoxy-PESs** | **Catalyst (Na₂CO₃, g)** | **DER 732 (g)** | **Isophthalic Acid (g)** | **Sebacic Acid (g)** | **C1 (g)** | **C2 (g)** | **C3 (g)** | **C4 (g)** | **C5 (g)** | **Final Measured Av (mg KOH/g)** | **Epoxy Equivalent Weight (g/eq.)** |
|---|---|---|---|---|---|---|---|---|---|---|---|
| **E1** | 0.06 | 266 | 34 | | | | | | | 0.3 | 900 |
| **E2** | 0.05 | 216 | | 34 | | | | | | 0.6 | 811 |
| **E3** | 0.06 | 167 | | | 133 | | | | | 0.5 | 1298 |
| **E4** | 0.06 | 137 | | | | 164 | | | | 0.7 | 1104 |
| **E5** | 0.06 | 213 | | | | | | 87 | | 0.6 | 970 |
| **E6** | 0.05 | 129 | | | | | 15 | | 16 | 0.6 | 906 |

### Example 4: Synthesis of Cyclic Carbonate Functional Polyesters (Cyclic Carbonate-PESs)

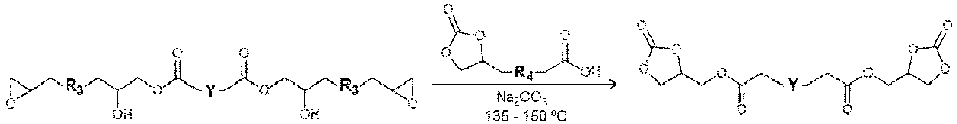

Procedure: In a round bottom flask and under N₂ atmosphere, a mixture of epoxy-resins, epoxy-PESs, the corresponding adduct GC-X-COOH (from Ex. 1 and 2) and the catalyst Na₂CO₃ (0.02 wt.%) were heated up slowly to 135 °C and stirred during 30 min. After that, the reaction mixture was heated up to 150 °C and maintained at those conditions until the measured acid value (Av) was lower than 1 mg KOH/g.

The reactants used and the properties of seven (7, CC1-CC7) Cyclic Carbonate Functional Polyesters (Cyclic Carbonate-PESs) made according to this procedure are given in Table 3 herein below.

### Example 5: Synthesis of Cyclic Carbonate Functional Polyesters (Cyclic Carbonate-PESs)

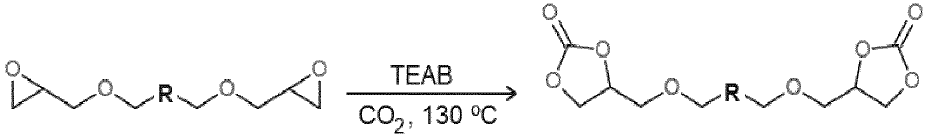

An epoxy-resin and the catalyst tetraethyl ammonium bromide (5% molar) are stirred in a glass round bottom flask under CO₂ atmospheric pressure - the air inside the flask being displaced by CO₂ with the help of carbon dioxide filled balloons - at 130 °C. The progress of the reaction is observed by NMR and the products are obtained after few hours under these conditions, without formation of side products.

The reactants used and the properties of five (5, CC8-CC12) Cyclic Carbonate Functional Polyesters (Cyclic Carbonate-PESs) made according to this procedure are given in Table 3 herein below.

**Table 3: Cyclic Carbonate-PESs**

| **Cyclic Carbonate PESs** | Catalyst (Na₂CO, g) | GC-Glut (g) | GC-Suc (g) | DER 732 (g) | Erisys GE-35 H (g) | DER 331 (g) | E1 (g) | E2 (g) | E3 (g) | E4 (g) | E5 (g) | E6 (g) | Final Measured Av (mg KOH/g) | Cyclic Carbonate Equivalent Weight (g/eq) |
|---|---|---|---|---|---|---|---|---|---|---|---|---|---|---|
| **CC-1** | 0.03 | 29 | | | | | 122 | | | | | | 5.1 | 1216 |
| **CC-2** | 0.05 | 54 | | | | | | 196 | | | | | 0.9 | 1088 |
| **CC-3** | 0.02 | 15 | | | | | | | 135 | | | | 0.9 | 2327 |
| **CC-4** | 0.05 | 20 | | | | | | | | 131 | | | 1.0 | 1788 |
| **CC-5** | 0.03 | 23 | | | | | | | | 147 | | | 0.2 | 1696 |
| **CC-6** | 0.03 | 27 | | | | | | | | | 123 | | 0.5 | 1311 |
| **CC-7** | 0.05 | 28 | | | | | | | | | | 122 | 0.6 | 1238 |
| **CC-8** | 0.04 | | 79 | 121 | | | | | | | | | 0.9 | 593 |
| **CC-9** | | 22 | | 30 | | | | | | | | | 3.8 | 637 |
| **CC-10** | 4.2 | | | 255 | | | | | | | | | - | 364 |
| **CC-11** | 4.1 | | | | 200 | | | | | | | | - | 214 |
| **CC-12** | 3.0 | | | | | 100 | | | | | | | - | 231 |

### Example 6: Synthesis of Amino Functional Polyesters (Amino-PESs)

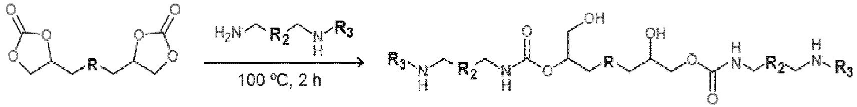

In a round bottom flask and under an N₂ atmosphere, the designated cyclic carbonate polymer and a diamine are mixed and heated up to 100 °C. The mixture is stirred and kept at these conditions for 2 hours. The progress of the reaction and the achievement of full conversion is monitored through both NMR and IR.

The reactants used and the properties of fourteen (14) amino functional polyesters (Amino-PESs) made according to this procedure are given in Table 4 herein below.

**Table 4: Amino Functional Polyesters (Amino PESs)**

| **Amino Functional Polyester** | Baxx (g) | 2-AMP (g) | CC-1 (g) | CC-2 (g) | CC-3 (g) | CC-4 (g) | CC-5 (g) | CC-6 (g) | CC-7 (g) | CC-8 (g) | CC-9 (g) | CC-10 (g) | NHv (g/eq) |
|---|---|---|---|---|---|---|---|---|---|---|---|---|---|
| **NH-1** | 6 | | 44 | | | | | | | | | | 46.6 |
| **NH-2** | | 4 | 46 | | | | | | | | | | 39.4 |
| **NH-3** | 10 | | | 70 | | | | | | | | | 44.9 |
| **NH-4** | 3 | | | | 47 | | | | | | | | 26.3 |
| **NH-5** | 4 | | | | | 46 | | | | | | | 30.0 |
| **NH-6** | | 3 | | | | 47 | | | | | | | 28.9 |
| **NH-7** | 7 | | | | | | 73 | | | | | | 32.4 |
| **NH-8** | 5 | | | | | | | 45 | | | | | 39.5 |
| **NH-9** | | 4 | | | | | | 46 | | | | | 41.4 |
| **NH-10** | 6 | | | | | | | | 44 | | | | 39.8 |
| **NH-11** | | 4 | | | | | | | 46 | | | | 40.2 |
| **NH-12** | 31 | | | | | | | | | 119 | | | 73.9 |
| **NH-13** | 3 | | | | | | | | | | 10 | | 74.0 |
| **NH-14** | 4 | | | | | | | | | | | 10 | 112.0 |

### Example 7: Adhesive Formulations

As shown in Table 5 herein below, twelve (12) adhesive formulations (AF1-AF12) were prepared by mixing seven of the above defined amino functionalized polyesters (Table 4: NH1, NH3, NH7, NH8, NH12, NH13 and NH14) with a curing partner, specifically an epoxy resin or cyclic carbonate resin. The mixtures are prepared at a ratio of [Epoxy / Cyclic carbonate groups] : [Primary and Secondary Amino groups] of 1:1 and are cured at different temperatures.

**Table 5: Adhesive Formulations**

| **Formulation** | PEI (mg) | NH-1 (mg) | NH-3 (mg) | NH-7 (mg) | NH-8 (mg) | NH-12 (mg) | NH-13 (mg) | NH-14 (mg) | Erisys GE-60 (mg) | DER 331 (mg) | CC-11 (mg) | CC-12 (mg) |
|---|---|---|---|---|---|---|---|---|---|---|---|---|
| **AF-1** | | | 2631 | | | | | | 369 | | | |
| **AF-2** | | | 2609 | | | | | | | 391 | | |
| **AF-3** | | | | 2724 | | | | | 276 | | | |
| **AF-4** | 36 | 1174 | | | | | | | | | 290 | |
| **AF-5** | 37 | | | | 1192 | | | | | | 271 | |
| **AF-6** | 35 | | | | | | | | | | 325 | |
| **AF-7** | 36 | 1156 | | | | | | | | | | 308 |
| **AF-8** | 36 | | | | 1121 | | | | | | | 289 |
| **AF-9** | 35 | | | | | | | | | | | 344 |
| **AF-10** | 19 | | | | | 500 | | | 139 | | | |
| **AF-11** | 19 | | | | | | 500 | | 139 | | | |
| **AF-12** | 29 | | | | | | | 500 | 210 | | | |

Utilizing these adhesive formulations, lap shear tests were performed according to DIN EN 1465 and using the following substrates: Polycarbonate, PC-PC; steel-steel; ABS-ABS; and, Beech Wood - Beech Wood. The results of the tests performed at room temperature are shown in Table 6 herein below, wherein "N/M" means "not measured".

**Table 6: Lap Shear Strengths**

| **Adhesive Formulation** | **Curing Conditions** | **Steel-Steel (MPa)** | **Wood-Wood (MPa)** | **ABS - ABS (MPa)** | **PC - PC (MPa)** |
|---|---|---|---|---|---|
| **AF-1** | Cured at 100°C for 2 hours, except for ABS where cured for 80°C for 3 hours | 1.18 | 0.95 | 0.48 | 1.04 |
| **AF-2** | | 0.34 | N/M | N/M | 1.48 |
| **AF-3** | | 0.95 | N/M | 0.36 | 1.08 |
| **AF-4** | Cured at 130°C overnight | 0.42 | 0.99 | | |
| **AF-5** | | N/M | 1.41 | | |
| **AF-6** | | N/M | 0.82 | | |
| **AF-7** | | 3.11 | 1.38 | | |
| **AF-8** | | 2.37 | 0.87 | | |
| **AF-9** | | 2.18 | 1.13 | | |

### Example 8: Thermal stability of cured Amino-PESs versus Prior Art.

The Amino-PESs where mixed with 40 mol.% PEI and the epoxy resin Erisys GE 60 at a 1:1 ratio of Epoxide : Total Amine (Primary and Secondary). The mixtures were cured at 120°C for 2 hours. After confirming the full curing of the samples by Differential Scanning Calorimetry, the thermal stability of the obtained materials was evaluated by thermal gravimetric analysis (TGA). The results of this analysis are given in Table 7 herein below.

**Table 7: Thermal Stability (TGA)**

| **Adhesive Formulation** | **% Weight Remaining at Stated Temperature** | | | | | |
|---|---|---|---|---|---|---|
| | **100 °C** | **250°C** | **275 °C** | **300 °C** | **325 °C** | **350 °C** |
| AF-10 | 100.0 | 87.4 | 78.3 | 60.7 | 38.5 | 23.8 |
| AF-11 | 99.3 | 85.7 | 77.4 | 60.8 | 38.4 | 25.1 |
| AF-12 | 99.7 | 86.0 | 75.1 | 51.8 | 30.3 | 20.1 |

At high temperatures (>250 °C), the samples prepared in the present work, which contain a polyester backbone (AF-10 and AF-11), displayed better thermal stability than homologous polymer chains containing only polyether functionality (AF-12).

## Claims

1. A method for preparing an amino and hydroxy-functional polyester, said method comprising:
reacting glycerine carbonate with an anhydride to form an Adduct (A);
reacting said Adduct (A) with at least one polyepoxide compound to form said cyclic carbonate functional polyester (CC-PES); and,
reacting said cyclic carbonate functional polyester with at least one aliphatic, alicyclic, heterocyclic or aromatic amine containing at least two primary and / or secondary amine groups.

2. The method according to claim 1 for preparing an amino and hydroxy-functional polyester, said method comprising the stages:
A) reacting glycerine carbonate with an anhydride to form an Adduct (A);
B) providing a polycarboxylic acid;
C) reacting said polycarboxylic acid with at least one diglycidyl ether to form an epoxy functional polyester;
D) reacting said epoxy functional polyester with said Adduct (A) to form a cyclic carbonate functional polyester; and,
E) reacting said cyclic carbonate functional polyester with at least one aliphatic, alicyclic, heterocyclic or aromatic amine containing at least two primary and / or secondary amine groups.

3. The method according to claim 1 or claim 2, wherein the reactant anhydride is selected from the group consisting of: maleic anhydride; adipic anhydride; succinic anhydride; alkyl succinic anhydrides; alkenyl succinic anhydrides; glutaric anhydride; alkyl glutaric anhydrides; alkenyl glutaric anhydrides; and, mixtures thereof.

4. The method according to any one of claims 1 to 3, wherein the reaction of said glycerine carbonate with said anhydride is performed under at least one of the following limitations:
i) at an anhydride: glycerine carbonate molar ratio in the range from 2:1 to 0.8:1, preferably in the range from 1.2:1 to 0.8:1 and more preferably in the range from 1.1:1 to 0.9:1;
ii) at a temperature in the range from 60° to 180°C, preferably from 80° to 150°C; and,
iii) under anhydrous conditions.

5. The method according to any one of claims 2 to 4, wherein said polycarboxylic acid of Stage B is a carboxyl functional polyester (Carboxy-PES) preferably **characterized by** an acid value (Av) of from 50 to 500 mgKOH/g, preferably from 80 to 430 mgKOH/g.

6. The method according to any one of claims 2 to 5, wherein in Stage C the or each diglycidyl ether has an epoxy equivalent weight of from 100 to 700 g/eq, preferably from 120 to 320 g/eq.

7. The method according to any one of claims 2 to 6, wherein in Stage C the molar ratio of the diglycidyl ether compounds to the carboxyl functional polyester is from 1.5:1 to 3:1, preferably from 1.8: 1 to 2.2:1.

8. The method according to any one of claims 2 to 7, wherein Stages C and D are performed:
i) at a temperature in the range from 40° to 180°C, preferably from 60° to 170°C; and / or
ii) in the presence of a catalytic amount of a basic catalyst.

9. The method according to any one of claims 2 to 9, wherein Stages B to D are carried out in one vessel sequentially and without separation of the intermediate products.

10. The method according to any one of claims 1 to 9, wherein in said reaction of the Adduct (A) the equivalence ratio of the carboxyl groups to the epoxy groups is at least 1:1 and is preferably in the range from 1.0:1 to 1.2:1 or from 1.0:1 to 1.1:1.

11. The method according to any one of claims 1 to 10, wherein said at least one reactant amine having at least two primary and / or secondary amine groups is selected from the group consisting of: C1 to C20 aliphatic amines; C4 to C20 alicyclic amines; and, C2 to C20 heterocyclic amines.

12. The method according to claim 11, wherein said at least one reactant amine is selected from the group consisting of: C1 to C12 aliphatic diamines; C4 to C12 alicyclic diamines; and, C2 to C12 heterocyclic diamines.

13. The method according to claim 11 or claim 12, wherein said at least one reactant amine contains at least two primary and / or secondary amine groups having different reactivities.

14. An amino and hydroxy-functional polyester obtained by the method defined in any one of claims 1 to 13, said polyester preferably being **characterized by** at least one of:
a number average molecular weight (Mn) of from 500 to 5000 g/mol, preferably from 800 to 3000 g/mol; and,
an amine value of from 10 to 400 mgKOH/g, preferably from 20 to 200 mgKOH/g; and,
a hydroxyl value of from 30 to 500 mgKOH/g, preferably from 40 to 350 mgKOH/g.

15. A curable coating, adhesive or sealant composition comprising:
an amino and hydroxy-functional polyester as defined in claim 14; and,
at least one multifunctional compound (H) having at least two functional groups (F) selected from the group consisting of: epoxy groups; isocyanate groups; and cyclic carbonate groups.
